# EUROPEAN PATENT APPLICATION

(11) **EP 3 177 000 A1**
(43) Date of publication of application: **07.06.2017**
(21) Application number: 15197828.5
(22) Date of filing: 03.12.2015
(51) Int. Cl.: H04N 1/00

(54) **NETWORKED DOCUMENT SCANNING APPARATUS, METHOD OF DOCUMENT SCANNING, AND A COMPUTER PROGRAM**

(71) Applicant: Ricoh Company, Ltd., Tokyo 143-8555 (JP)
(72) Inventor: MASUDA, Yusaka, Ohta-ku, Tokyo 143-8555 (JP)
(74) Representative: Leeming, John Gerard

(57) **Abstract**

A document scanning apparatus comprising a network interface unit; an image reading unit configured to scan a hardcopy document and generate a scanned data file; a user information obtaining unit configured to obtain user information associating a user with an address of a user computer belonging to the user; and a control unit configured to control the network interface unit to transfer the scanned data file to the user computer using the user information.

## Description

The present invention relates to a networked document scanning apparatus, a method of document scanning using the networked document scanning systems, and a computer program.

In large organisations it is common to provide many multi-function apparatuses (also known as multi-function peripherals), which have printing and scanning capabilities, connected to a network for use by multiple users. Such an approach is often more economical than providing a separate apparatus for each user, especially if advanced functions - such as high speed and volume scanning and large area flatbed scanning - are desired. Various approaches to handling the data file resulting from scanning a document are known, but all have various disadvantages.

A common approach is for the data file to be stored in the multi-function apparatus, e.g. on a hard disk. This has the disadvantage that the user has to log onto the multi-function apparatus from a remote device, e.g. their PC, to download the data file, which can be time consuming. Also, if users do not delete their data files after downloading, the storage in the multi-function apparatus quickly fills up because the data files are often large.

Another approach is for the data files to be stored on a central file server. This suffers from the same issues as storing data files on the multi-function apparatus. Although the central file server might have a larger storage capacity than a multi-function apparatus it can still fill up quickly if it is storing data files from multiple multi-function apparatuses. Also, selecting a suitable folder for the data file on the file server when scanning and finding the data file afterwards can be time consuming.

Another approach is to send the data file by email to the user or to another recipient. However, it can be time consuming for the user to enter email addresses accurately and many email systems do not handle well large files that can be generated by scanning large documents. This approach also requires a mail server, e.g. an SMTP server.

For a large organisation with many sites, if a central file server or a mail server is provided on each site then the number of servers required and the maintenance burden therefor increases. An alternative is to provide fewer servers and make those servers available via a wide area network (e.g. the Internet). However such a system becomes more vulnerable to communication failures in the local area networks or wide area networks. Also, network traffic is increased.

It is an aim of the present invention to at least partially solve one or more of the above problems and provide resilience in the face of communication failures in a system of networked document scanning apparatuses.

According to an embodiment of the present invention, there is provided a document scanning apparatus comprising:
a network interface unit;
an image reading unit configured to scan a hardcopy document and generate a scanned data file;
a user information obtaining unit configured to obtain user information associating a user with an address of a user computer belonging to the user; and
a control unit configured to control the network interface unit to transfer the scanned data file to the user computer using the user information.

According to an embodiment of the present invention, there is provided a method of scanning document in a networked system comprising a local area network, a user computer connected to the local area network, and a document scanning apparatus connected to the local area network, the method comprising:
the document scanning apparatus obtaining user information associating a user with an address of a user computer belonging to the user;
the document scanning apparatus scanning a document and generating a scanned data file; and
the document scanning apparatus transferring the scanned data file to the user computer using the user information.

According to an embodiment of the present invention, there is provided a computer program comprising code means that when executed by a user computer instruct the computer to:
register a user with an authentication server to establish a user information record associating the user with an address of the user computer;
in response to a request from a document scanning apparatus, provide at least one scanning parameter; and
receive from the document scanning apparatus a scanned data file.

Exemplary embodiments of the invention are described below with reference to the accompanying drawings, in which:
Figure 1 is a schematic drawing of a networked system according to an embodiment of the invention;
Figure 2 is a schematic drawing of a user computer having a printer driver according to an embodiment of the invention;
Figure 3 is a schematic drawing of a cache database in an embodiment of the invention; and
Figure 4 is a process diagram of a method of an embodiment of the invention.

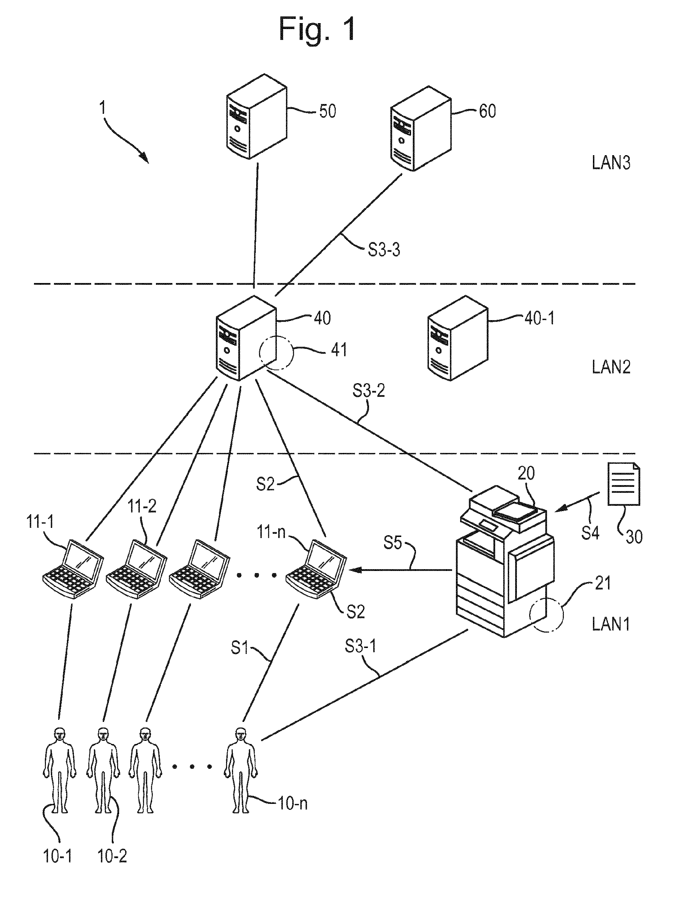

A networked document scanning system **1** according to an embodiment of the invention is depicted schematically in Figure 1. A plurality of user computers **11-1** to **11-n** are connected to a first local area network **LAN1** and operated by a plurality of users **10-1** to **10-n.** The number of users **10** need not be equal to the number of user computers. The user computers **11** can include desktop and laptop computers, tablets, smartphones, virtual machines and other computing devices. The user computers may operate using any convenient operating system such as Windows®, iOS or Linux.

The first local area network **LAN1** may be based on wired or wireless technologies, or a combination of both and can operate using any suitable protocol such as Ethernet (IEEE 802.3) and/or Wi-Fi (IEEE 802.11).

A document scanning apparatus **20** is also connected to the first local area network **LAN1** and is able to scan a document **30.** Document scanning apparatus **20** may be, for example, an image forming apparatus such as a multi-function peripheral (MFP) capable of one or more additional functions, such as printing, copying or faxing, as well as scanning. Document scanning apparatus **20** may have a flatbed scanner, an automatic document feeder, a document camera or a combination thereof. Document scanning apparatus **20** may have a print engine to create printed output on media such as paper, transparencies, envelopes, etc.. The print engine may operate according to any convenient printing technique, such as xerography, inkjet printing, bubble jet printing, etc.. There may be multiple document scanning apparatus **20** of various forms connected to the first local area network **LAN1.**

The first local area network **LAN1** is connected to a second local area network **LAN2** via a wide area network (WAN) such as the Internet. First local area network **LAN1** and second local area network **LAN2** may be connected via a virtual private network (VPN). Authentication server **40** is provided in the second local area network **LAN2** and provides authentication services for an organisation. Authentication may be required, for example, when a user logs onto a user computer, connects a user computer to the first local area network **LAN1,** or accesses a network resource, such as image forming device **20.**

In a large organisation having many sites and/or large sites, the users may be divided up amongst many different local area networks, due to physical restrictions on network size and/or limits on the number of users per network. Providing an authentication server per local area network therefore means that there must be many authentication servers, increasing the maintenance burden and making synchronisation of data between the authentication servers burdensome. It is generally desirable that users be able to log onto and use resources of any network in their organisation. Therefore it is desirable that the number of authentication servers **40** be kept to a minimum and so an authentication server **40** may provide authentication services to users and resources connected to multiple different local area networks, which may be physically remote from one-another. Authentication server **40-1** provides fail-over service in the case of an error with authentication server **40.**

Authentication server **40** may communicate with other servers, for example a directory server **50** and a database server **60.** Directory server, for example an LDAP server, may store a hierarchical directory of users, including information such as user IDs, real names, hashed passwords and access rights. Database server **60,** for example an SQL server, may store data recording users' usage of the network and its resources. The usage data may be used for accounting purposes and/or for tracking the consumption of consumables such as paper, ink or toner.

For the same reasons as with the authentication server, an organisation may desire to reduce the number of directory servers **50** and database servers **60** it maintains. Hence the directory server **50** and database server **60** may be located in one or more third local area networks **LAN3.** They can also be located in the same local area network as the authentication server **40.**

It should be noted that whilst the present invention is described in relation to a system which is connected to multiple local area networks, the invention can also be applied in a system in which all components are connected to the same network, be that a local area network, a wide area network, wired or wireless.

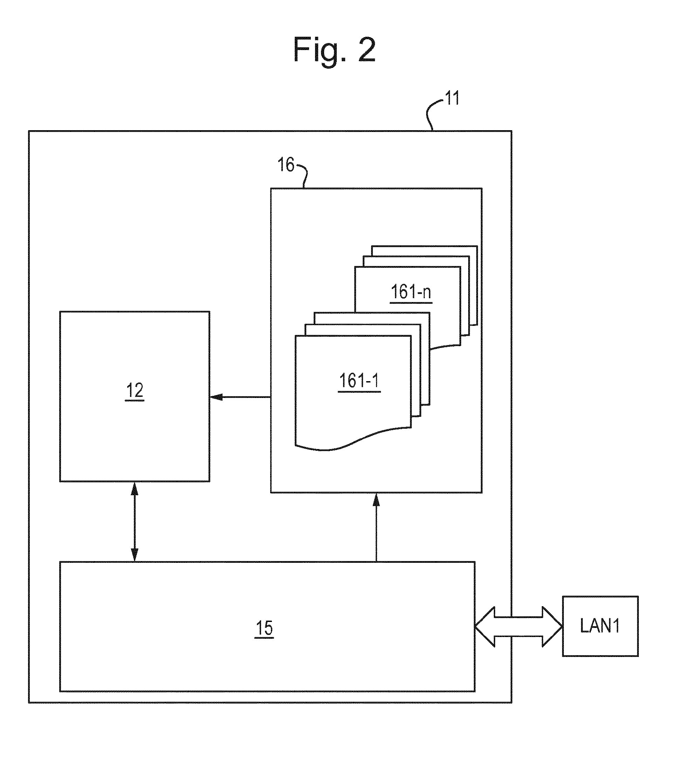

Figure 2 depicts a user computer **11.** User computer **11** includes a central processing unit **12** for executing programs, a network interface **15** for communicating with first local area network LAN1 and a storage device **16.** Storage device **16** may be a solid state drive, a fixed disk drive or a drive for removable media. Storage device **16** stores, among other things, scanned image data files **161-1** to **161-n** that have been generated by one or more document scanning apparatuses from scanning a document. A computer program, referred to herein as a client tool, is executed by client PC **11** to perform functions of the invention as described further below. The client tool can also be stored in storage **16.**

The present invention concerns the scanning of documents in hardcopy form. A document in hardcopy form can be provided on any type of sheet medium, especially paper, in loose or bound form. A document can carry content in the form of printed or/and written text in any script or language, drawings and other graphical content, photographs or any combination of such elements. The content of a document may be presented in monochrome, e.g. black text on a white background, or colour.

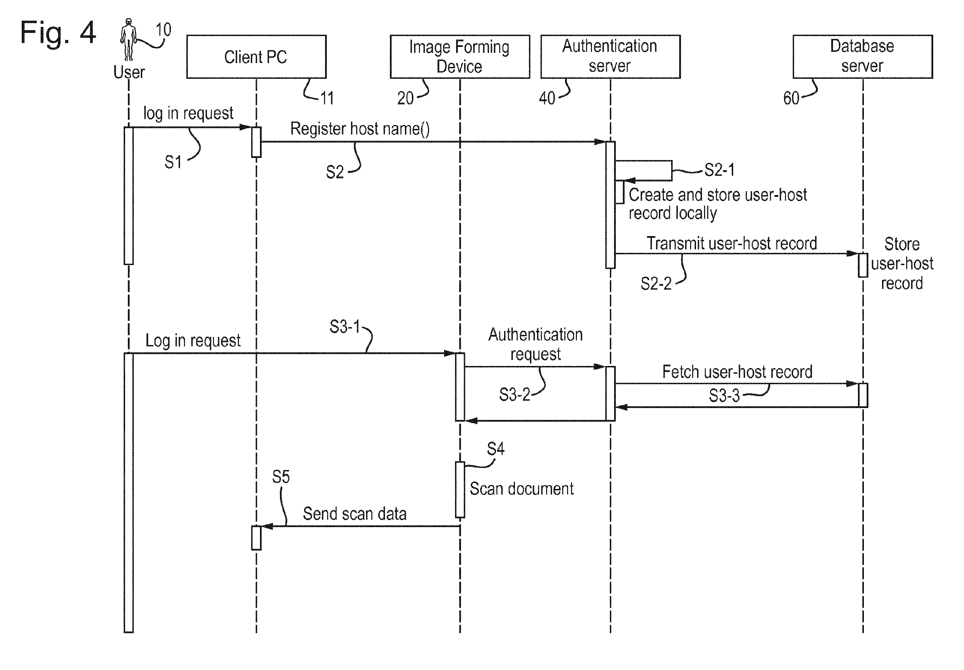

The process of scanning a document in an embodiment of the invention will now be described in more detail with reference to Figures 1 and 4.

In normal circumstances, when a user **10** wishes to use a client PC **11** connected to a network in a large organisation, he/she will generally be required to log in **S1** using a password. Other methods of logging in such as using biometrics or a security token such as a smartcard can also be employed. When the user logs in to the client PC **11,** the client PC **11** validates the log in request either using locally stored information or by referring to the authentication server **40.** If the log in validation check is passed, client PC **11** registers the user as using that client PC **11** with the authentication server **40.**

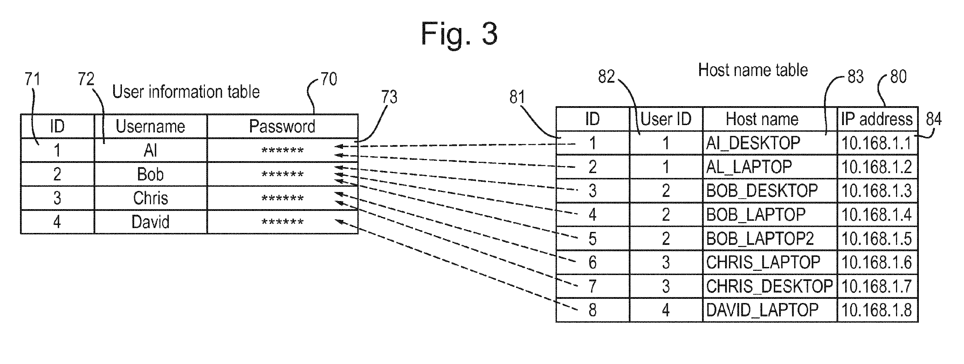

Authentication server **40** creates **S2-1** a user-host record, e.g. as shown in Figure 3. Users are identified in a user information table **70** which includes a user ID or index field 71, a user name field **72** and a password field **73.** Password field **73** preferably stores a hash of the password rather than the password in plain text. A host name table **80** stores a plurality of records, uniquely identified by index field **81,** which comprise a user ID field **82,** a host name field **83** and an IP address field **84.** As shown, a user can be associated with multiple hosts. It is also possible for multiple users to be associated with a single client computer. In such a case, the client computer may present itself as a different virtual computer for each user thereof. The user-host record is stored locally at the authentication server in first cache database **41** and also transmitted **52-2** to database server **60.**

It should be noted that the above log in process, in which the user-host record is created and stored, need not be carried out specifically for the purpose of scanning a document. Rather, the log in process can be performed when the user logs on at the beginning of a work period or to use another network service, such as printing.

When a user **10** wishes to scan a document, he/she proceeds to a document scanning apparatus **20** at which he or she wishes to scan the document and logs in **S3-1.** Various different log-in methods can be provided. For example the user may log in by entering a username and password or PIN on an input device, using a swipe card, smart card or RFID token, biometrics or any combination of such methods. The document scanning apparatus **20** sends **S3-2** an authentication request to authentication server **40** including, for example, the user ID and a hashed password. Authentication server **40** indicates the authentication request based on its own records or by reference to directing server **50.** If the authentication request is valid, authentication server **40** requests **S3-3** all the user-host records for that user from database server **60.** These records identify the user computer(s) **11** with which the user is registered. In the normal course of events the database server **60** returns the relevant user-host records. If the user has registered with multiple client PCs, the database server **60** returns all relevant user-host records. If the organisation maintains multiple authentication servers **40,** the user-host records need not have been originally registered by the authentication server **40** to which they are returned.

Authentication server **40** then sends the user-host record(s) to the document scanning apparatus **20.**

The user-host record(s) received by the document scanning apparatus **20** from authentication server **40** is desirably stored in a second cache database **21** within the document scanning apparatus **20.**

Document scanning apparatus **20** is now in a position to perform the scan for the user **10.** Before doing so, document scanning apparatus **20** may request relevant scanning parameters from the user. Scanning parameters that the user may be asked to set depend upon the capabilities of the document scanning apparatus. Scanning parameters may include: scanning resolution (e.g. in dpi); output file format (e.g. pdf, tiff or jpeg); original size; original orientation; single sided or double sided scanning; colour mode (e.g. black and white, colour); colour depth; etc. Different scanning parameters may be relevant according to whether the scanner is a flatbed scanner or a document camera rather than an automatic document feed-type scanner. Scanning parameters may also include a scanning mode, which may determine the post-processing applied to the scanned image data, e.g. to optimise for different content types such as text, line drawings, photographs or mixed documents. Scanning parameters may also relate to other forms of post-processing to be carried out such as optical character recognition (OCR), image compression or encryption of the scanned data file.

In an embodiment of the present invention, the document scanning apparatus **20** can use the retrieved user-host record to request from the user's client PC default values for one or more of the scanning parameters. The default parameters can then be presented to the user for acceptance or modification. If the user is associated with multiple PCs and the multiple PCs report different defaults, the user may be asked to select a set of defaults. The user may also have the facility of storing multiple sets of default scanning parameters on a single client PC.

If the user is associated with only a single client PC, the document scanning apparatus **20** next proceeds to perform the scan. If the user is associated with multiple client PCs, the document scanning apparatus may prompt the user to select one or more of the client PCs with which he or she is associated as a destination for the scanned image data file. Allowing a user to send the scanned image data file to multiple locations increases user convenience, albeit at the cost of increased use of data storage capacity. To maximise user convenience, the scanned image data file can by default be sent to all client PCs with which the user is associated.

The document scanning apparatus **20** then scans **S4** the document and processes the scanned image data into a scanned image data file in accordance with the selected scanning parameters. The scanned image data file is then sent **S5** to the relevant client PC **11.** Any suitable protocol, such as FTP or HTTP can be used to send the scanned image data file to the client PC. Client PC **11** stores the second image data file in the storage device **16** as one of scanned image data files **161-1** to **161-n.**

Since scanned image data files can be very large, it may be desirable to impose a size limit on the data files. The size limit can be applied by the document scanning apparatus **20** or by the client PC **11** e.g. as part of the default scanning parameters. If the default scanning parameters are not transmitted from the user PC prior to scanning, the user PC may reject an overly large document sent to it at the time of transmission. In the event that the scanned image data file exceeds the relevant size limit, the user may be presented with options for reducing the size of the image data file, for example by reducing the resolution and/or colour depth, compressing the scanned image data file and/or deleting pages from the scanned image data file. The client PC may also reject the scanned image data file sent to it because the client PC's mass storage capacity is insufficient. In that event, the user may be given the option of temporarily storing the scanned image data file in some other location, such as for example in a mass storage device of the document scanning apparatus **20.**

As well as providing increased user convenience, an embodiment of the present invention can provide increased resilience to failures in the various networks and servers involved. A number of different failure cases can be dealt with.

In a first failure case, communication between LAN1 and LAN2 is unavailable and/or authentication servers **40, 40-1** are unavailable. In that event, document scanning apparatus **20** can use the user-host records stored in second cache database **21.** If a user-host record for the user is not stored in second cache database **21,** the user can be prompted to enter a hostname for the relevant client PC **11.**

In a second failure case, communication between authentication server **40** and directory server **50** and/or database server **60** is unavailable. In that event, user-host records stored in first cache database **41** on authentication server **40** can be used.

Thus, it will be seen that the present invention allows scanning services to be maintained provided that the local network is functional and need not rely on communication to remote server databases.

If it is desired to record usage information, the document scanning apparatus **20** sends a usage message to database server **60** which records the user's usage. The usage message can be sent directly to database server **60** or via authentication server **40.**

An additional advantage of the above described embodiments is that a separate file server is not required since the scanned image data files are stored by the various user computers. Since second image data files can be very large files, a file server may require very large storage devices to accommodate scanned image data files from a large number of users. On the other hand, with the scanned image data files distributed amongst the user computers **11** the storage requirement is spread and the users are more motivated to perform housekeeping, e.g. deleting no longer required files. Furthermore, with a central file server creating scanned image data files from multiple document scanning apparatus, a high communication bandwidth is required and a file server can become a bottleneck within the network. With the scanned image data files distributed amongst multiple user computers, the communication load is distributed and a bottleneck is avoided.

In an embodiment of the invention multiple document scanning apparatuses **20** are provided within LAN1. Each has its own second cache database **21.** To solve the problem that, when communication to the authentication server **40** is interrupted, a user might wish to scan using one of the document scanning apparatuses that the user has not previously used, the second cache databases **21** of the multiple document scanning apparatus **20** are synchronised. This can be done periodically, e.g. by the document scanning apparatus transmitting copies of their own second cache database to other image forming apparatus on a predetermined schedule.

As with the first cache database **41,** entries in the second cache database **21** can be deleted manually when no longer required or expire automatically after a predetermined period. In an embodiment of the invention, a limit is set on the number of records that are held in the first cache database **41** and/or the second cache database **21.** The limit may be set on a per user basis or on an overall total basis. If a limit is set then when the limit is to be exceeded, the oldest or least recently accessed record is deleted to make room.

Having described specific embodiments of the present invention, it will be appreciated that variations and modifications of the above described embodiments can be made. The scope of the present invention is not to be limited by the above description but only by the terms of the appended claims.

## Claims

1. A document scanning apparatus comprising:
a network interface unit;
an image reading unit configured to scan a hardcopy document and generate a scanned data file;
a user information obtaining unit configured to obtain user information associating a user with an address of a user computer belonging to the user; and
a control unit configured to control the network interface unit to transfer the scanned data file to the user computer using the user information.

2. Apparatus according to claim 1, wherein the user information obtaining unit is configured to obtain the user information from an authentication server.

3. Apparatus according to claim 2 wherein the user information obtaining unit is configured to store the user information in a cache provided in the document scanning apparatus.

4. Apparatus according to claim 4, wherein the address of a user computer is a hostname and/or an IP address.

5. Apparatus according to any one of the preceding claims, wherein the user information comprises authentication information of a user.

6. Apparatus according to any one of the preceding claims wherein control unit is further configured to use the user information to obtain a scanning parameter from the user computer and to control the image reading unit to perform a scan using the scanning parameter.

7. Apparatus according to claim 6 wherein the scanning parameter is selected from the group consisting of: scanning resolution, colour mode, file format, OCR mode.

8. An image forming apparatus including a document scanning apparatus according to any one of the preceding claims.

9. A method of scanning document in a networked system comprising a local area network, a user computer connected to the local area network, and a document scanning apparatus connected to the local area network, the method comprising:
the document scanning apparatus obtaining user information associating a user with an address of a user computer belonging to the user;
the document scanning apparatus scanning a document and generating a scanned data file; and
the document scanning apparatus transferring the scanned data file to the user computer using the user information.

10. A method according to claim 9 wherein the document scanning apparatus obtains the user information from an authentication server.

11. A method according to claim 9 or 10 wherein the document scanning apparatus obtains a scanning parameter from the user computer using the user information and performs the scanning using the scanning parameter.

12. A method according to claim 11 wherein the scanning parameter is selected from the group consisting of: scanning resolution, colour mode, file format, OCR mode.

13. A computer program comprising code means that when executed by a user computer instruct the computer to:
register a user with an authentication server to establish a user information record associating the user with an address of the user computer;
in response to a request from a document scanning apparatus, provide at least one scanning parameter; and
receive from the document scanning apparatus a scanned data file.
